# EUROPÄISCHE PATENTSCHRIFT

(11) **EP 0 894 667 B1**
(45) Veröffentlichungstag und Bekanntmachung des Hinweises auf die Patenterteilung: **08.12.2004**
(21) Anmeldenummer: 98111233.7
(22) Anmeldetag: 18.06.1998
(51) Int. Cl.: B60Q 1/44

(54) **Elektronischer Bremslichtschalter mit Fremdansteuerung**
Externally controlled electronic braking switch
Interrupteur de freinage commandé extérieurement

(30) Priorität: 01.08.1997 DE 19733342
(43) Veröffentlichungstag der Anmeldung: 03.02.1999
(73) Patentinhaber: MAN Nutzfahrzeuge Aktiengesellschaft, 80976 München (DE); Robert Seuffer GmbH & Co., 75365 Calw-Hirsau (DE)
(72) Erfinder: Eisermann, Günter, 85757 Karlsfeld (DE); Plener, Helmut, 81249 München (DE); Merz, Jürgen, 85757 Karlsfeld (DE); Tritt, Gerhard, 72218 Wildberg (DE)

(56) Entgegenhaltungen:
- WO-A-81/02713
- WO-A-97/44213
- DE-A- 3 804 094
- DE-A- 3 811 339

## Beschreibung

Die Erfindung betrifft eine Einrichtung nach dem Oberbegriff des Anspruches 1.

Eine Einrichtung dieser Art ist aus der DE 32 33 765 bekannt. Bei dieser Ansteuerungseinrichtung kommt es bei jeder Art des Abbremsens des Fahrzeuges zu einer Anzeige durch die Bremsleuchten. Damit diese Anzeige möglich ist, ist eine Verzögerungserfassungseinrichtung vorgesehen, durch die bei Fahrzeugverzögerung ab einem bestimmten Betrag und einer bestimmten Geschwindigkeit ein Ausgangssignal erzeugt wird, mittels dessen die Bremsleuchten ansteuerbar sind. Zusätzlich ist die Anzeige eines Defektes des Geschwindigkeitsgebers möglich.

In Fahrzeugen heutiger Bauart sind Geschwindigkeitsgeber für z. B. ABS und ASR bereits vorhanden. Im Normalfall ist deshalb bereits ein Geschwindigkeitssignal vorhanden. Ein Detektieren eines möglichen Defektes eines Geschwindigkeitsgebers, wie in der genannten DE beschrieben ist, ist im Zusammenhang mit der Ansteuerungseinrichtung für das Schalten von Bremsleuchten nicht erforderlich.

Damit überhaupt ein weitläufiger Vergleich der Erfindung mit der DE 32 33 765 möglich ist, müßte die Verzögerungserfassungseinrichtung auch außerhalb der Betrachtung bleiben, da sich die Erfindung nicht auf die Anzeige der Verzögerung des Fahrzeuges allgemein bezieht. Weiterhin müßte das Signal, das durch die Verzögerungserfassungseinrichtung abgebbar ist, durch ein Signal, das aus der Betätigung des Retarders kommt (z. B. über einen mechanischen oder elektrischen Geber bzw. Schalter), ersetzt werden. Eine automatische Stauwarneinrichtung, wie sie auch Gegenstand der DE 32 33 765 ist, soll ebenfalls außerhalb der Betrachtung bleiben, da diese Einrichtung nicht Ziel der Erfindung ist.

Vergleicht man nun unter den genannten Vorgaben, so wäre zwar die Funktion, das Einschalten von Bremsleuchten ähnlich, der Aufbau des Gegenstandes der DE 32 33 765 und der Aufwand jedoch erheblich höher.

Bei Lastkraftwagen und Omnibussen, die bekanntlich eine Druckluftbremsanlage haben, ist es bekannt, Näherungsschalter (Induktivschalter) für das Schalten der Bremsleuchten zu benutzen. Diese Schalter sind sehr robust und wenig störanfällig. Die Ausgestaltung dieser Schalter ist von den Werkzeugkosten her gesehen sehr teuer. Die Stückkosten sind aber niedrig. Das System ist ausgereift und man möchte es nicht verlassen.

Die Dauerbremsen von Nutzfahrzeugen werden immer wirkungsvoller, so daß eine Anzeige, also ein Aufleuchten der Bremsleuchten, auch bei Betätigung einer Dauerbremse ab einer bestimmten Schaltstufe, als sinnvoll erscheint.

Der Erfindung liegt nun die Aufgabe zugrunde, mit möglichst geringem Aufwand die Anzeige der Betätigung einer Dauerbremse zu realisieren.

Die Aufgabe wird erfindungsgemäß durch die Merkmale des Anspruches 1 gelöst.

Der genannte Induktivschalter hat auf der Verkabelungsseite 4 Pole (Pins), einen Stromeingang, einen Stromausgang und zwei Minuspole für eine einfachere Verkabelung, wenn ein Minuspol zu einem anderen elektrischen Gerät geleitet werden soll.

Erfindungsgemäß wird nun der eine Minuspol in der Funktion umgestaltet als bidirektionaler (Ein-/Ausgang) Anschluß, der mit dem Bordrechner verbunden ist. Dementsprechend ist die Platine im Induktivschalter erfindungsgemäß neu gestaltet, so daß auch durch ein Signal, das z. B. ab einer bestimmten Schaltstufe an der Dauerbremse und aus der Fahrzeuggeschwindigkeit gebildet wird und in den Bordrechner eingeht und in ein Signal für den bidirektionalen Anschluß umgewandelt wird, mit dem über den Schalter die Bremsleuchten aufleuchtend schaltbar sind. Vorzugsweise wird das im Bordrechner bereits vorhandene Geschwindigkeitssignal als Kriterium für die Ausgabe des Signals zum Induktivschalter mit herangezogen. Die neugestaltete Platine ist wie folgend beschrieben aufgebaut:

Der Induktivgeber erhält, wenn die Betriebsreibungsbremse betätigt wird, durch die Bewegung des Bremsnockens, der sich in das Magnetfeld des Induktivschalters bewegt, ein Signal, das durch den Induktivgeber in ein Signal umgesetzt wird, das an ein Oder-Glied und dann an den Leistungsschalter weitergeleitet wird, der wiederum den Strom für das Aufleuchten der Bremsleuchten schaltet. Von dem Induktivgeber wird gleichzeitig ein Signal an die Auswertelogik gegeben. Aus dem Ausgang des Signals des Leistungsschalters wird auch ein Signal an die Auswertelogik geleitet. Nun kann ein Signal aus der Auswertelogik, die die Signale des Induktivgebers und des Ausganges des Leistungsschalters berücksichtigt, an die Signalaufbereitung gegeben werden, die auf dem bidirektionalen Anschluß ein Signal an den Bordrechner liefert. Im Bordrechner kann das Signal entsprechend weiterverarbeitet werden. Außerdem erkennt er, daß der Leistungsschalter nicht defekt ist und die Bremsleuchten geschaltet sind. Im Falle, daß die Bremsleuchten nicht geschaltet sind, erkennt er den Defekt des Leistungsschalters.

Bei Betätigung einer Dauerbremse ab einer bestimmten Bremsstufe erhält der Bordrechner ein Signal und gibt unter Berücksichtigung des Signals aus der Fahrzeuggeschwindigkeit ein Signal über den bidirektionalen Anschluß an den Induktivschalter. Die Signalaufbereitung erkennt, daß das Signal vom Rechner kommt und gibt ein Signal an den Oder-Schalter, der dem Leistungsschalter ein Signal für das Schalten zum Aufleuchten der Bremsleuchten gibt. An den Induktivgeber geht kein Signal.

Werden Dauerbremse und Betriebsreibungsbremse betätigt, so werden die Signale aus beiden Bremsen im Schalter verarbeitet und die Bremsleuchten ebenfalls zum Aufleuchten gebracht.

In der Zeichnung ist ein Ausführungsbeispiel der Erfindung schematisch dargestellt:

Es zeigen:
- Fig. 1: den Aufbau der Platine des Schalters mit Tabelle,
- Fig. 2: Einbauanordnung des Schalters,
- Fig. 3: Aufbau der ursprünglichen Platine.

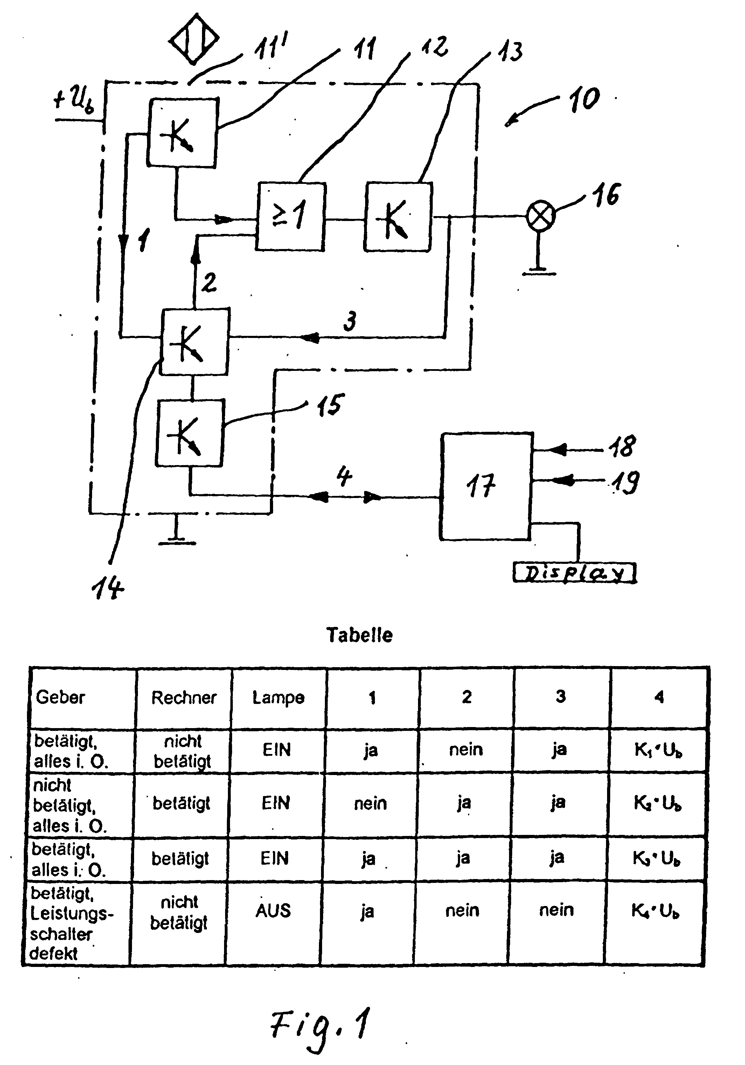

In der Fig. 1 ist der erfindungsgemäße Aufbau der Platine gezeigt. Durch die Störung des Magnetfeldes 11' erzeugt der Induktivgeber 11 ein Signal, das an das Oder-Glied 12 geleitet wird, das ein Signal an den Leistungsschalter 13 gibt, wodurch der Leistungsschalter 13 den Strom für das Aufleuchten der Bremsleuchten 16 schaltet. Am Ausgang des Leistungsschalters 13 wird ein Signal, daß der Strom für das Aufleuchten der Bremsleuchten 16 geschaltet ist, auf dem Pfad 3 zur Auswertelogik 14 gegeben. Vom Induktivgeber 11 wird auch ein Signal über den Pfad 1 an die Auswertelogik 14 gegeben. Die Auswertelogik 14 gibt nun ein Signal an die Signalaufbereitung 15, die das Signal K₁ · U_{b} erstellt und an den Bordrechner 17 über den Pfad 4, das der bidirektionale Anschluß ist, gibt. In der Tabelle zur Fig. 1 in Zeile 1 ist das Beschriebene ersichtlich.

Die zweite Zeile der Tabelle zeigt den Signallauf, wenn durch den Bordrechner 17, also in umgekehrter Richtung wie in Zeile 1, ein Signal über den Pfad 4, dem bidirektionalen Anschluß, an den Induktivschalter 10 bzw. an die Signalaufbereitung 15 gegeben wird. Die Signalaufbereitung 15 leitet das aufbereitete Signal an die Auswertelogik 14 und diese gibt ein Signal über Pfad 2 an das Oder-Glied 12, das ein Signal an den Leistungsschalter 13 für das Aufleuchten der Bremsleuchten 16 gibt. Von der Signalaufbereitung 15 erhält der Bordrechner das Signal K₂ · U_{b} und erkennt, daß die Bremsleuchten aufleuchten.

In Zeile 3 der Tabelle ist der Signallauf ersichtlich, wenn die Betriebsreibungsbremse und die Dauerbremse betätigt ist.

In Zeile 4 der Tabelle ist der Signallauf ersichtlich, wenn der Leistungsschalter 13 defekt ist. Dadurch, daß in diesem Fall kein Signal über den Pfad 3 kommt, formuliert die Signalaufbereitung ein Signal K₄ · U_{b}, das sich vom Signal K₁ · U_{b} unterscheidet, obwohl in beiden Fällen nur die Betriebsbremse betätigt wurde. Der Rechner erkennt an dem Signal K₄ · U_{b}, daß der Leistungsschalter 13 defekt ist.

Hier wurde als Beispiel eine spannnungsabhängige Datenübertragung K · U_{b} gewählt. Es können natürlich auch alle anderen in der Datenübertragung bekannten Verfahren eingesetzt bzw. verwendet werden.

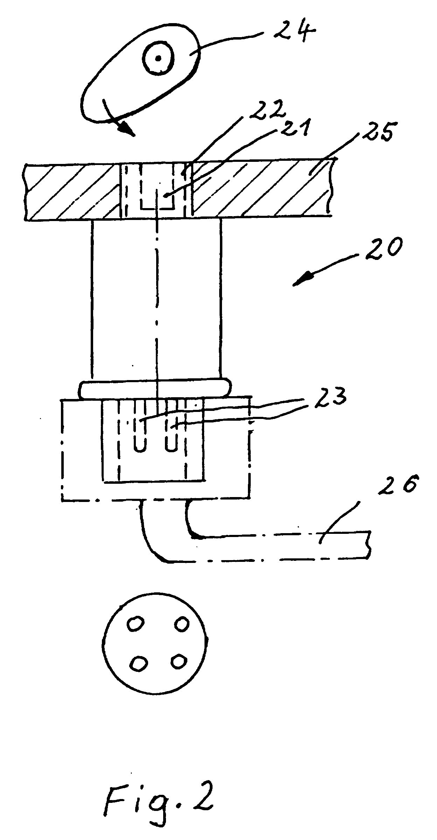

In Fig. 2 ist die Form des Induktivschaltergehäuses 20 und die Anordnung gezeigt. Der Magnetteil 21 ist im Gehäuseteil 22 des Induktivschaltergehäuses 20 angebracht. Das Induktivschaltergehäuse 20 ist in ein fahrzeugfestes Bauteil 25 in der Nähe des Bremsnockens 24 für die Betätigung der Betriebsreibungsbremse angebracht. Wenn nun die Betriebsreibungsbremse betätigt wird, bewegt sich der Bremsnocken 24 in das Magnetfeld des Magnetteiles 21. Dadurch wird ein Signal an den Induktivgeber 11 (Fig. 1) gegeben, der über die Schaltung (Fig. 1) die Bremsleuchten zum Aufleuchten bringt. Der bidirektionale Eingang, Pfad 4 (Fig. 1), ist im Kabelstrang 26 enthalten. Von den vier Anschlüssen 23, von denen ursprünglich zwei für die Erdung waren, ist nur ein Anschluß für die Erdung und erfindungsgemäß der freigewordene Anschluß bidirektional, in der einen Richtung für Signale aus dem Induktivschalter 10, 20 zum Bordrechner und in der anderen Richtung für das Signal aus dem Bordrechner zum Induktivschalter 10, 20, mit dem die Bremsleuchten auch aufleuchtend schaltbar sind, wenn eine Dauerbremse betätigt wird.

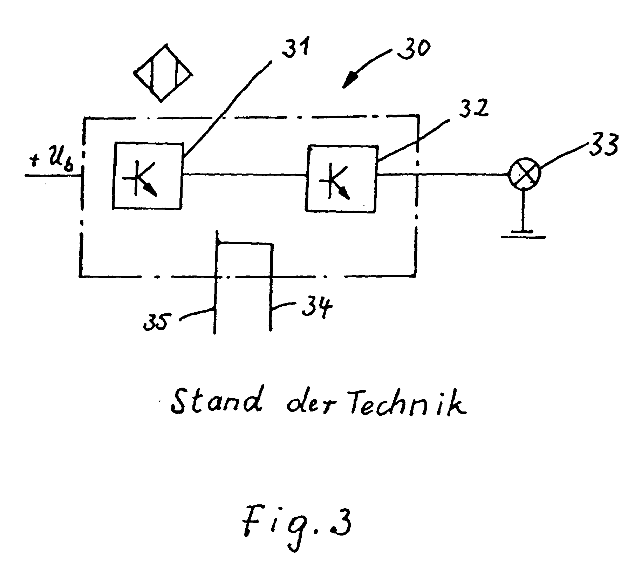

In der Fig. 3 ist das ursprüngliche Schaltbild 30 des Induktivschalters gezeigt. Bei Bewegung des Bremsnockens 24 (Fig. 2) gibt der Induktivgeber 31 ein Signal an den Leistungsschalter 32, der den Strom zum Schalten der Bremsleuchten 33 schaltet. Die zwei Masseanschlüsse 34, 35 waren deshalb vorgesehen, damit der Schalter einfacher zu verkabeln ist, wenn er in ein elektrisches System eingebaut wird und wenn der Masseanschluß "weitergegeben" werden muß.

## Patentansprüche

1. Elektronischer Bremslichtschalter für ein Nutzfahrzeug, mit einem Bordrechner und mindestens einer Dauerbremse, mit einem Bremslichtschalter, der induktiv durch die Bewegung eines Bremsnockens (24) der Betriebsreibungsbremse schaltbar ist und die Anschlüsse für Stromeingang, Stromausgang und zwei Anschlüsse für die Erdung aufweist, **dadurch gekennzeichnet, daß** ein äußerlich gleicher Schalter (10, 20) nur einen Erdungsanschluß hat und der ursprünglich zweite Erdungsanschluß ein bidirektionaler (Ein-/Ausgang) Anschluß (4, 23) für einen Bordrechner (17) ist, und der elektronische Bremslichtschalter (10, 20) innerlich mit Transistorschaltungen (11, 13, 14, 15) so ausgestaltet ist, daß sowohl über das induktive Signal (11'), bei Betätigung der Betriebsteibungsbremse, als auch über die Signale (18, 19) über den bidirektionalen Anschluß (4, 23) die Bremsleuchten (16) zum Aufleuchten schaltbar sind.

2. Elektronischer Bremslichtschalter nach Anspruch 1, **dadurch gekennzeichnet, daß** ein Bordrechner (17), abhängig von einem Signal (18), das z. B. ab einer bestimmten Bremsstufe eines Retarders und der Fahrzeuggeschwindigkeit (19), ein Signal an den bidirektionalen Anschluß (4, 23) für das Aufleuchten der Bremsleuchten (16) liefert.

3. Elektronischer Bremslichtschalter nach den Ansprüchen 1 und 2, **dadurch gekennzeichnet, daß** durch unterschiedliche Spannungspegel am bidirektionalen Anschluß (4, 23) ein Defekt des Leistungsschalters (13) durch den Bordrechner (17) erkennbar ist und in einem Display sichtbar gemacht werden kann.

## Claims

1. Electronic brake light switch for a commercial vehicle with an on-board computer and at least one sustained-action brake, with a brake-light signal which can be inductively switched through the motion of a brake cam (24) of the service brake and is provided with the connections for current input and current output and with two connections for earthing purposes, **characterised in that** a switch (10, 20) with identical outward appearance has only one earthing connection and the originally second earthing connection is a bidirectional (input/output) connection (4, 23) for an on-board computer (17) and the electronic brake-light switch (10, 20) is internally fitted with transistor circuits (11, 13, 14, 15) so that the brake lights can be switched for lighting up both via the inductive signal (11') upon actuation of the service brake and via the signals (18, 19) sent via the bidirectional connection (4, 23).

2. Electronic brake-light switch according to Claim 1, **characterised in that** an on-board computer (17) supplies a signal to the bidirectional connection (4, 23) for the lighting up of the brake lights (16) as a function of a signal (18) which is provided e.g. from a certain brake stage of a retarder and the vehicle's road speed (19).

3. Electronic brake-light switch according to the Claims 1 and 2, **characterised in that** as a result of different voltage levels at the bidirectional connection (4, 23) a defect in the circuit-breaker (13) can be recognised by the on-board computer (17) and be visualised on a display.

## Revendications

1. Commutateur électronique de feu de stop pour un véhicule industriel, avec un ordinateur embarqué et au moins un frein continu, avec un commutateur de feu de stop qui peut être activé par induction par le mouvement d'une came de frein (24) du frein de service à frottement et présente les raccordements d'entrée/de sortie de courant et deux raccordements à la masse, **caractérisé par le fait qu'**un commutateur (10, 20) identique de l'extérieur possède seulement un raccordement à la masse et le deuxième raccordement à la masse d'origine est un raccordement bidirectionnel (entrée/sortie) (4, 23) pour un ordinateur de bord (17), et **par le fait que** le commutateur électronique de feu de stop (10, 20) est conçu à l'intérieur avec des commutations à transistor (11, 13, 14, 15) de telle manière que les feux de stop (16) puissent être activés pour s'allumer aussi bien par le biais d'un signal inductif (1 1'), lors de l'actionnement du frein de service à frottement, que par le biais de signaux (18, 19) passant par le raccordement bidirectionnel (4, 23).

2. Commutateur électronique de feu de stop selon la revendication 1, **caractérisé par le fait qu'**un ordinateur embarqué (17) livre un signal au raccordement bidirectionnel (4, 23) pour l'éclairage des feux de stop (16) en fonction d'un signal (18) émis à partir d'un certain niveau de freinage d'un ralentisseur et de la vitesse du véhicule (19).

3. Commutateur électronique de feu de stop selon les revendications 1 et 2, **caractérisé par le fait que**, étant donné le niveau de tension variable dans le raccordement bidirectionnel (4, 23), il est possible de détecter un dysfonctionnement du disjoncteur (13) grâce à l'ordinateur embarqué et de le rendre visible sur un écran.
